# EUROPEAN PATENT APPLICATION

(11) **EP 4 620 732 A1**
(43) Date of publication of application: **24.09.2025**
(21) Application number: 24164541.5
(22) Date of filing: 19.03.2024
(51) Int. Cl.: B60P 1/02, B60P 1/34, B60P 1/64

(54) **TRANSPORT VEHICLE HAVING A REARWARDLY OPEN CHASSIS**

(71) Applicant: Scrapskrot AB, 212 31 Malmö (SE)
(72) Inventor: Alm, Lars-Göran, 212 31 Malmö (SE)
(74) Representative: Høiberg P/S

(57) **Abstract**

A load transportation vehicle comprises a rearwardly open chassis configured to receive a load carrier from an open rear part of the chassis and four lifting units. Each lifting unit includes a lifting arm adapted to lift and lower the load carrier and an electric linear actuator configured to apply a force to the lifting arm to lift and lower the load carrier. The vehicle is designed for efficient loading and unloading of the load carrier, making it suitable for various transportation applications.

## Description

The technology relates to the field of load transportation vehicles, specifically focusing on the design and functionality of vehicles used for lifting, transporting, and unloading various types of load carriers, such as containers. This field encompasses the development of efficient and versatile systems for handling and moving heavy loads in various industries, including logistics, construction, and manufacturing.

### Background

Load transportation vehicles, such as container transporters, are specialized vehicles designed to carry load carriers, such as containers, efficiently and safely. These vehicles are essential for the transportation of goods in various industries, including shipping, logistics, and construction. Load carriers can be loaded onto load transportation vehicles using several methods, depending on the type of transporter and available equipment. For example, load carriers can be lifted directly from the ground using a crane or other lifting equipment.

Some load transportation vehicles have a rearwardly open chassis, allowing the load carrier to be loaded from the rear. In such a chassis, the rear end of the chassis may be left open, allowing the load to be driven or backed onto the chassis from the rear.

While these methods offer advantages for the loading of load carriers, they also present several challenges and limitations. One challenge is the fixed position of the load carrier on the load transportation vehicle. This fixed position makes it difficult to access the load carrier from different heights, resulting in a challenging and time-consuming process for loading and unloading its content.

Another problem associated with the prior art is the securing of the load carrier to the load transportation vehicle. Ensuring that the load carrier is securely attached to the load transporter can be a challenge, as the current design of load transporters may not provide adequate securing mechanisms for the load carriers. This can result in the load carrier not being securely attached to the transporter, posing a risk to the safety of the transported goods and the vehicle itself.

In summary, the prior art presents several challenges and limitations in the loading and unloading process of load carriers onto load transportation vehicles and transportation of the load carriers. These challenges include the fixed position of the load carrier on the transporter, inadequate securing mechanisms, and limited loading and unloading methods. These issues can result in a time-consuming and inefficient process, negatively impacting the overall efficiency and safety of the transportation process.

### Summary

The present disclosure relates to a load transportation vehicle that comprises a rearwardly open chassis configured to receive a load carrier from an open rear part of the chassis. This design allows for easy loading and unloading of the load carrier, improving the efficiency of the transportation process. Optionally in some examples, the rearwardly open chassis is substantially U-shaped.

The load transportation vehicle may comprise four lifting units, each lifting unit comprising a lifting arm adapted to lift and lower the load carrier. The four lifting units may be disposed at positions corresponding to four corresponding securing elements of the load carrier, such as at positions adjacent to four inner corners of the rearwardly open chassis. This feature allows for precise control over the positioning of the load carrier, which can be particularly useful when loading and unloading the load carrier. An electric linear actuator may be configured to apply a force to the lifting arm to lift and lower the load carrier. The use of an electric linear actuator provides a reliable and efficient means of controlling the lifting arm, reducing the manual effort required to operate the vehicle. Each lifting unit may further comprise a position sensing unit configured to measure a position of an output rod or shaft of the electric linear actuator. The position sensing unit may be integrated into the electric linear actuator, but can also be a separate element or unit. The position can be measured directly as a distance, or by measuring the number of turns in a screw mechanism that is normally part of an electric linear actuator. The position sensing unit allows for precise measurement and control of the height of the load carrier.

Optionally in some examples, the electric linear actuator is a pulling electric linear actuator arranged such that when a rod, such as a lead screw, ball screw or threaded rod, is pulled inward, i.e. into a housing or body of the electric linear actuator, it causes the lifting arm to move upwards to lift the load carrier. This arrangement provides a simple means of operating the lifting arm, making the vehicle easy to use. In this embodiment, the fact that the electric linear actuator performs a pulling movement rather than a pushing movement to lift the lifting arm and a potentially heavy loaded load carrier, eliminates the risk of a rod or shaft in the electric linear actuator bending or breaking.

Optionally in some examples, the lifting arm performs a pivoting movement when lifting and lowering the load carrier.

According to a third aspect of the disclosure, the lifting arm comprises a hook element at a first end of the lifting arm. This hook element provides a secure means of attaching the load carrier to the lifting arm, which prevents the load carrier from becoming detached during transportation.

Optionally in some examples, the hook element is adapted to receive a securing element of the load carrier. This feature allows for a secure and reliable connection between the load carrier and the lifting arm, reducing the risk of the load carrier becoming detached during transportation.

Optionally in some examples, the hook element is adapted to receive and lock a securing element of the load carrier. This locking feature provides an additional level of security, ensuring that the load carrier remains securely attached to the lifting arm at all times.

Optionally in some examples, the hook element has a rounded inner cross-sectional profile. This rounded profile allows for a secure and snug fit with the securing element of the load carrier, reducing the risk of the load carrier becoming detached during transportation.

According to a fourth aspect of the disclosure, the electric linear actuator is connected to one or more guide arms, which are connected to the lifting arm. This arrangement provides a stable and reliable means of controlling the movement of the lifting arm, improving the precision with which the load carrier can be positioned.

Optionally in some examples, the electric linear actuator is connected to a second guide arm by a movable electric linear actuator joint, wherein the second guide arm is connected to a first guide arm by a fixed guide arm joint, and wherein the first guide arm is connected to the lifting arm by a movable lifting arm joint. This arrangement provides a high degree of flexibility in the movement of the lifting arm, allowing for precise positioning of the load carrier. The lifting units may be arranged such that when the electric linear actuator applies a force to the lifting arm to lift or lower the load carrier, a first end of the lifting arm moves substantially vertically.

According to a fifth aspect of the disclosure, the lifting arm comprises a lifting arm positioning wheel at a second end of the lifting arm configured to move in a guide groove forwards or backwards relative to the load transportation vehicle. This feature allows for precise control over the positioning of the lifting arm, improving the efficiency and accuracy of the loading and unloading process.

Optionally in some examples, the load transportation vehicle is configurable in at least three configurations: a load carrier loading position, a transport position and an upper goods loading position. This feature provides a high degree of versatility in the operation of the vehicle, allowing it to be adapted to a wide range of different loading and unloading scenarios.

Optionally in some examples, the load transportation vehicle is configurable in a further tipping configuration. This feature allows for efficient unloading of the load carrier, reducing the time and effort required to unload the vehicle.

Optionally in some examples, two front lifting units are configured to hold the load carrier in an upper position wherein two rear lifting units are configured to hold the load carrier in a lower position in the tipping configuration. This arrangement allows for efficient unloading of the load carrier, particularly when the load carrier is tipped.

According to a sixth aspect of the disclosure, the four lifting units are individually controllable and/or controllable in front and rear pairs of lifting units. This feature allows for precise control over the positioning of the load carrier, which can be particularly useful when loading and unloading the load carrier. By controlling the lifting points in front and rear pairs of lifting units allows for, for example, controlling a process of tipping the load carrier.

Optionally in some examples, the four lifting units are disposed at or adjacent to four corners of the rearwardly open chassis. This arrangement provides a stable and secure platform for the load carrier, reducing the risk of the load carrier tipping or falling during transportation.

According to a seventh aspect of the disclosure, the load transportation vehicle is a truck. This feature allows for the transportation of large and heavy loads, increasing the utility and versatility of the vehicle.

According to an eighth aspect of the disclosure, a load transportation vehicle assembly is provided that comprises a load transportation vehicle and a load carrier. This assembly provides a complete solution for the transportation of loads, simplifying the logistics of the transportation process.

Optionally in some examples, the load carrier has four securing elements configured to fit and optionally be locked in the hook elements of the lifting arms. This feature provides a secure and reliable means of attaching the load carrier to the lifting arms, reducing the risk of the load carrier becoming detached during transportation.

Optionally in some examples, the securing elements are movable in a substantially longitudinal direction of the load carrier. This feature allows for precise positioning of the load carrier on the lifting arms, improving the efficiency and accuracy of the loading and unloading process.

Optionally in some examples, the load carrier is a container. This feature allows for the secure and efficient transportation of a wide range of different types of loads, increasing the versatility of the vehicle assembly.

According to a ninth aspect of the disclosure, a method of using a load transportation vehicle is provided that comprises the steps of loading the load carrier onto the load transportation vehicle from the rear, lifting the load carrier to a suitable height using the electric linear actuators of the lifting units, and during the step of lifting the load carrier, securing the load carrier to the load transportation vehicle using hook elements on the lifting arms. This method provides a simple and efficient means of loading, transporting, and unloading the load carrier, improving the efficiency of the transportation process.

### Description of drawings

Various embodiments are described hereinafter with reference to the drawings. The drawings are examples of embodiments and are intended to illustrate some of the features of the presently disclosed load transportation vehicle, and are not limiting to the presently disclosed load transportation vehicle and method.
Figure 1 is a perspective view of an embodiment of the presently disclosed load transportation vehicle.
Figure 2 is a side view of the load transportation vehicle in a loading configuration.
Figure 3 is a side view of the load transportation vehicle in a transport configuration.
Figure 4 is a side view of the load transportation vehicle in an upper goods loading configuration.
Figure 5 is a detailed view of a lifting unit used in the load transportation vehicle.
Figure 6 is a side view of the load transportation vehicle in a tipping configuration for efficient unloading.
Figure 7 is a perspective view of an example of a load carrier compatible with the load transportation vehicle.

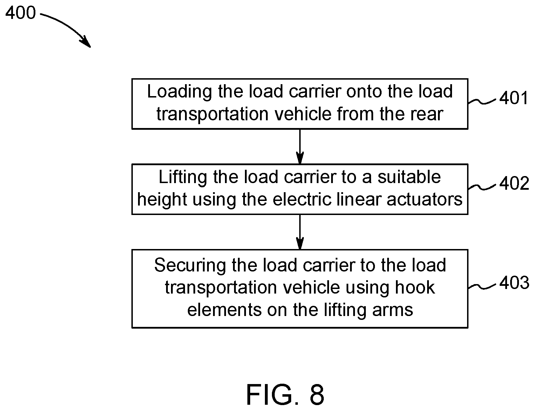

Figure 8 shows a flow chart of a method according to an embodiment of the presently disclosed method of operating a load transportation vehicle.

### Detailed description of drawings

The detailed description set forth below provides information and examples of the disclosed technology with sufficient detail to enable those skilled in the art to practice the disclosure. The drawings are examples of embodiments and are intended to illustrate some of the features of the presently disclosed load transportation vehicle, and are not limiting to the presently disclosed load transportation vehicle and method.

The detailed description set forth below provides information and examples of the disclosed technology with sufficient detail to enable those skilled in the art to practice the disclosure.

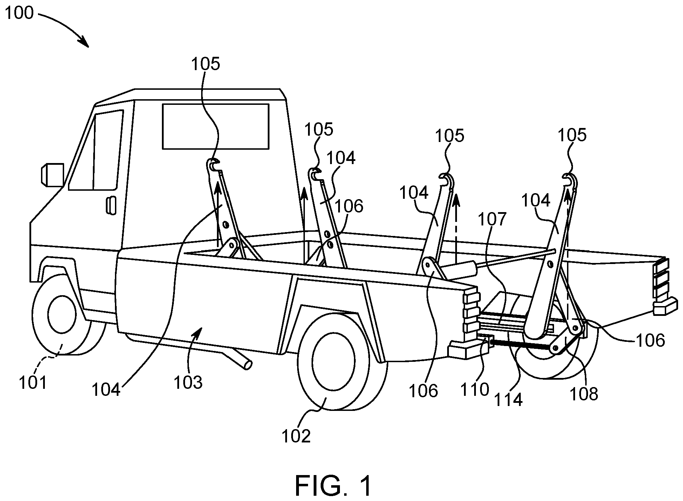

Figure 1 shows a perspective view of an embodiment of the load transportation vehicle 100. The vehicle comprises a rearwardly open chassis 103 configured to receive a load carrier from the open rear part. The chassis 103 is substantially U-shaped. The vehicle also includes four lifting units, each comprising a lifting arm 104 adapted to lift and lower the load carrier, and an electric linear actuator 110 configured to apply a force to the lifting arm 104 to lift and lower the load carrier 200. The load transportation vehicle 100 in the example has two front wheels 101 and two rear wheels 102. Each lifting arm 104 has a hook element 105. A first guide arm 106 is connected to the lifting arm 104. An electric linear actuator 110 is connected to a second guide arm 108. One end of the lifting arm 104 can move in a guide groove 107.

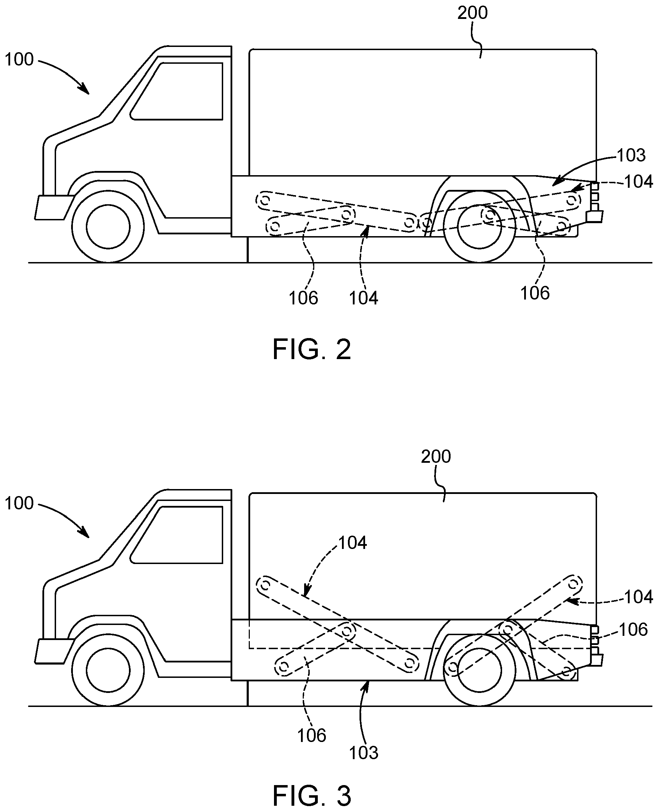

Figure 2 shows a side view of the load transportation vehicle 100 with the rearwardly open chassis 103 in a loading configuration. The lifting arm 104 is in a lowered position. A first guide arm 106 is connected to the lifting arm 104. From this position the load carrier 200 can easily be loaded or unloaded, for example by reversing the load transportation vehicle 100.

Figure 3 shows a side view of the load transportation vehicle 100 with the rearwardly open chassis 103 in a transport configuration. The lifting arm 104 has lifted the load carrier 200 to a suitable height for transportation. In this position, the hook element 105 at the first end of the lifting arm 104 may secure the load carrier 200 to the vehicle 100.

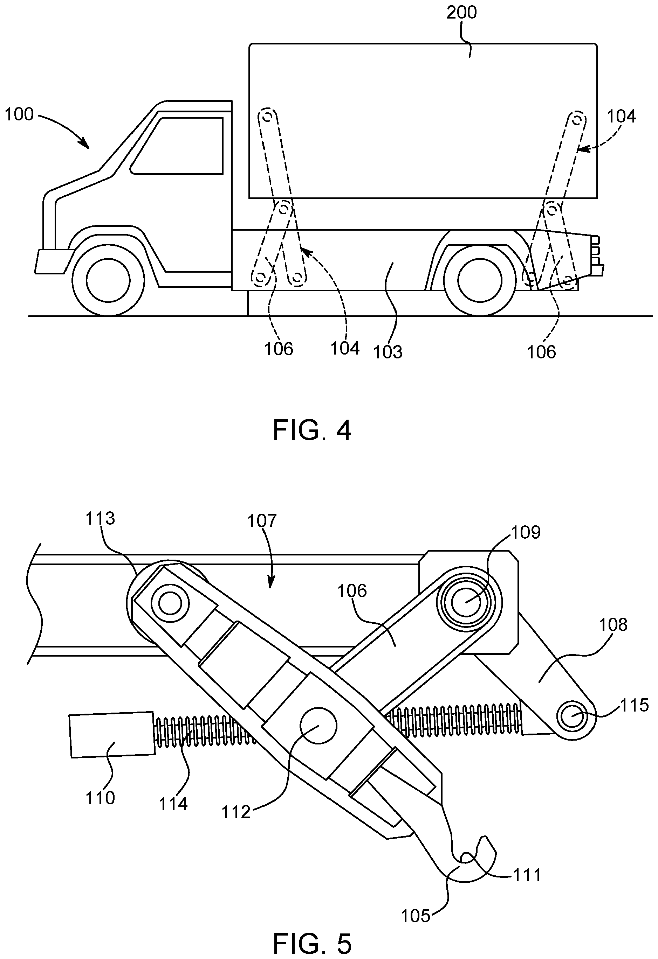

Figure 4 shows a side view of the load transportation vehicle 100 with the rearwardly open chassis 103 in an upper goods loading configuration. The lifting arm 104 has lifted the load carrier 200 to an even higher position, allowing for easier loading and unloading of goods from the load carrier 200 from a loading platform 500.

Figure 5 shows a detailed view of a lifting unit 116 used in the load transportation vehicle 100. The lifting arm 104 comprises a hook element 105 at its first end, which is adapted to receive and lock a securing element 201 of the load carrier 200. The hook element 105 has a rounded inner cross-sectional profile 111. The lifting arm 104 further comprises a lifting arm positioning wheel 113 at its second end, configured to move in a guide groove 107 forwards or backwards relative to the load transportation vehicle 100, more specifically in the longitudinal direction of the rearwardly open chassis 103. The electric linear actuator 110 is connected to a second guide arm 108 by a movable electric linear actuator joint 115. The electric linear actuator 110 comprises a housing and a rod 114, such as a threaded rod. The second guide arm 108 is then further connected to a first guide arm 106 by a fixed guide arm joint 109. The first guide arm 106 is then connected to the lifting arm 104 by a movable lifting arm joint 112. The functionality of the arrangement during a lifting process is that electric linear actuator 110 pulls the second guide arm 108, which makes the first guide arm 106 and the second guide arm 108 pivot. The pivoting will lift the lifting arm 104 upwards. The lifting arm thereby performs a pivoting movement.

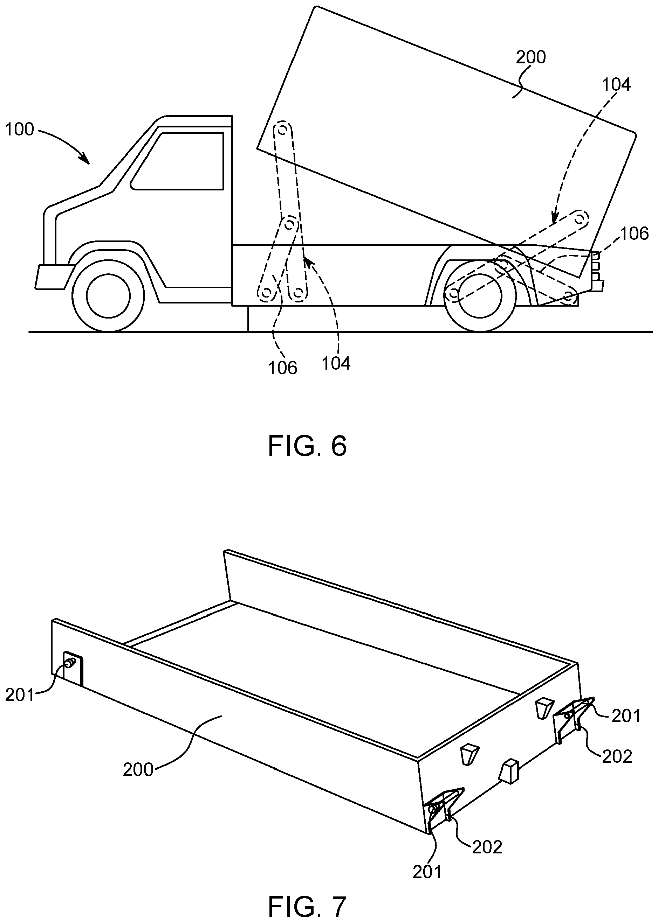

Figure 6 shows a side view of the load transportation vehicle 100 in a tipping configuration for efficient unloading. Two front lifting units 116 hold the load carrier 200 in an upper position, while two rear lifting units 116 hold the load carrier 200 in a lower position, creating a tilted orientation for the load carrier 200 to facilitate unloading.

Figure 7 shows a perspective view of an example of a load carrier 200 compatible with the load transportation vehicle 100. The load carrier 200 has four securing elements 201 configured to fit and optionally be locked in the hook elements 105 of the lifting arms 104. In this example, the front securing elements 201 are movable in a substantially longitudinal direction of the load carrier 200. The load carrier 200 can be a container or any other suitable structure for carrying goods. Each of the two front securing elements 201 is arranged such that a spring element 202 allows the two front securing elements 201 to move forward when the load carrier is tipped i.e. moved to a tilted orientation. When the load carrier 200 is lowered back to a horizontal position, the spring element moves the securing element (201) back to its original position.

### Detailed description

The present disclosure relates to a load transportation vehicle comprising: a rearwardly open chassis configured to receive a load carrier from an open rear part of the rearwardly open chassis four lifting units, each lifting unit comprising: a lifting arm adapted to lift and lower the load carrier; and an electric linear actuator configured to apply a force to the lifting arm to lift and lower the load carrier.

In some implementations, the load transportation vehicle is designed to facilitate the transportation of various types of loads. The vehicle may be equipped with a number of features that enhance its functionality and efficiency in load transportation. These features include a rearwardly open chassis, four lifting units, each comprising a lifting arm and an electric linear actuator. The lifting units may further comprise a hook element, a first guide arm, and a second guide arm. These components work together to ensure the smooth operation of the vehicle during the loading, transportation, and unloading of loads.

In some configurations, the load transportation vehicle features a rearwardly open chassis. This chassis is designed to receive a load carrier from the rear. The open rear design of the chassis allows for easy loading and unloading of the load carrier. In some examples, the chassis has a U-shaped configuration, which further facilitates the loading and unloading process. The U-shaped configuration of the chassis provides a clear and unobstructed path for the load carrier to be moved onto and off the vehicle.

In some examples, the load transportation vehicle is equipped with four lifting units. These lifting units are strategically positioned on the vehicle to provide balanced and efficient lifting of the load carrier. For example, they may be arranged adjacent to the corners of the chassis. Preferably, the four lifting units are arranged such that they match the corners of a load carrier, such as a container.

Each lifting unit may comprise a lifting arm, an electric linear actuator, optionally a hook element, a first guide arm, and a second guide arm. These components work in unison to lift the load carrier to a suitable height.

In some implementations, each lifting unit includes a lifting arm. The lifting arm is designed to lift and lower the load carrier. The lifting arm is connected to the electric linear actuator and is controlled by it to lift and lower the load carrier. In some examples, the lifting arm includes a hook element at one end, which is designed to receive and secure a securing element on the load carrier.

In some configurations, each lifting unit includes an electric linear actuator. The electric linear actuator is designed to apply a force to the lifting arm to lift and lower the load carrier. The electric linear actuator is connected to the lifting arm and controls its movement. In some examples, the electric linear actuator is a pulling type, arranged such that when a rod is pulled inward, it causes the lifting arm to move upwards to lift the load carrier. An electric linear actuator is a device that converts electrical energy into linear motion. It typically comprises an electric motor, a lead screw or ball screw mechanism, and a housing. When electrical power is applied to the motor, it generates rotational motion, which is then converted into linear motion through the screw mechanism. Electric linear actuators offer advantages such as high precision, repeatability, controllability, and ease of integration with electronic control systems. Each lifting unit may further comprise a position sensing unit configured to measure a position of an output rod or shaft of the electric linear actuator. The position can be measured directly as a distance, or by measuring the number of turns in the screw mechanism that is normally part of an electric linear actuator. When measuring the position of an output rod or shaft of the electric linear actuator, directly or indirectly, each position of the electric linear actuator will correspond to a height of the first end, i.e. the end that normally has a hook. A system, which may be integrated into the presently disclosed load transportation vehicle, can thus control the height of load carrier based on input data from the position sensing unit.

The load transportation vehicle may further comprise a support mechanism for supporting the load carrier in a drive configuration. The support mechanism may comprise, for example, a blocking element or structure that can be arranged to support the load carrier during transportation. One advantage with such a support mechanism is that the lifting unit and electric linear actuator are not exposed to forces that arise from movement of the vehicle.

In some implementations, the lifting arm includes a hook element at one end. The hook element is designed to receive and lock a securing element on the load carrier. This ensures that the load carrier is securely attached to the load transportation vehicle during transportation. In some examples, the hook element has a rounded inner cross-sectional profile for holding the securing element of the carrier and an open end through which the securing element can enter into the hook. This allows the hook to easily receive and secure the rounded securing element on the load carrier.

In some configurations, each lifting unit includes a first guide arm. The first guide arm is connected to the lifting arm and helps guide its movement during the lifting and lowering of the load carrier. The first guide arm may transfer a force, directly or indirectly, from the electric linear actuator. The first guide arm may also be connected to the electric linear actuator and may be controlled by it to lift the lifting arm.

In some examples, each lifting unit includes a second guide arm. The second guide arm may connect to the first guide arm and the electric linear actuator. The second guide arm may further assist the lifting arm during the lifting and lowering of the load carrier. The second guide arm is controlled by the electric linear actuator to guide the movement of the lifting arm.

In some implementations, the lifting arm includes a lifting arm positioning wheel at its second end. The positioning wheel is designed to move in a guide groove forwards or backwards relative to the load transportation vehicle. This movement of the positioning wheel in the guide groove allows for precise positioning of the lifting arm during the lifting and lowering of the load carrier. The positioning wheel ensures that the lifting arm moves smoothly and accurately, thereby enhancing the efficiency of the lifting process.

The lifting units may be arranged such that when the electric linear actuator applies a force to the lifting arm to lift or lower the load carrier, a first end of the lifting arm moves substantially vertically. As can be seen in the example of Figure 5, a first guide arm 106 may pivot around a pivot point that may be the fixed guide arm joint 109. In this example the first guide arm 106 to the lifting arm 104 by a movable lifting arm joint 112. The first guide arm 106 and the lifting arm 104 may be dimensioned and configured such that the first end of the lifting arm moves substantially vertically in a lifting or lowering movement. This may be an advantage in a number of scenarios, including, for example, when a load carrier is moved to an upper goods loading position, in which goods are loaded to or from a loading dock.

In some examples, the load carrier is designed to be loaded onto the load transportation vehicle from the rear. The load carrier may include a securing element that is designed to be received and locked by the hook element on the lifting arm of the vehicle. This ensures that the load carrier is securely attached to the vehicle during transportation. In some configurations, the securing element has a rounded shape, which allows it to easily fit into the rounded inner cross-sectional profile of the hook element.

In some implementations, the method of using the load transportation vehicle involves several steps. These steps include loading the load carrier onto the vehicle from the rear, lifting the load carrier to a suitable height using the lifting units, and securing the load carrier to the vehicle using the hook elements on the lifting arms. Since the lifting arm performs a pivoting movement when lifting and lowering the load carrier, the securing of the load carrier to the vehicle using the hook elements on the lifting arms may be done as an integral part of the process of lifting the load carrier.

In some examples, the loading process of the load carrier involves moving the load carrier onto the vehicle from the rear. The rearwardly open design of the chassis of the vehicle facilitates this process. The load carrier is moved onto the vehicle until it is positioned over the lifting units. The design allows for moving the vehicle backwards to receive the load carrier from the rear. Once the load carrier is positioned over the lifting units, the lifting process can begin.

In some implementations, the lifting process of the load carrier involves using the lifting units to lift the load carrier to a suitable height for transportation. Each lifting unit includes a lifting arm that is controlled by an electric linear actuator to lift and lower the load carrier. The lifting arm may include a hook element at one end, which receives and secures a securing element on the load carrier. This ensures that the load carrier is securely attached to the vehicle during transportation.

In some examples, the lifting units play a role in the lifting process of the load carrier. The lifting units are designed to lift the load carrier to a suitable height for transportation. Each lifting unit includes a lifting arm that is controlled by an electric linear actuator. The lifting arm moves upwards when the electric linear actuator pulls a rod inward, thereby lifting the load carrier. The lifting arm may further include a hook element that receives and secures a securing element on the load carrier, ensuring that the load carrier is securely attached to the vehicle during transportation.

In some implementations, the hook elements play a role in the securing process of the load carrier. The hook elements are designed to receive and lock a securing element on the load carrier. The hook elements may have a rounded inner cross-sectional profile, which allows them to easily receive and secure the rounded securing element on the load carrier. This ensures that the load carrier is securely attached to the vehicle during transportation. Moreover, the fact that the lifting arm may perform a pivoting movement when lifting and lowering the load carrier, may cause the hook elements to be positioned in an angle such that the securing elements can enter the hook elements in a lower position of the lifting arm and not leave the hook elements from a higher position of the lifting arm.

In some configurations, the vehicle includes a tipping mechanism for efficient unloading of the load carrier. The tipping mechanism involves holding the load carrier in a tilted orientation to facilitate unloading. Two front lifting units may hold the load carrier in an upper position, while two rear lifting units hold the load carrier in a lower position, creating a tilted orientation for the load carrier.

In some implementations, at least two of the securing elements, preferably the two front securing elements, on the load carrier are movable in the longitudinal direction of the load carrier. Each of the two front securing elements may be arranged such that a spring element allows the two front securing elements to move forward when the load carrier is tipped i.e. moved to a tilted orientation. When the load carrier is lowered back to a horizontal position, the spring element moves the securing element back to its original position.

In some examples, the vehicle can be configured in at least three positions: a load carrier loading position, a transport position, and an upper goods loading position. These positions are designed to facilitate the loading, transportation, and unloading of the load carrier. The vehicle can be easily moved between these positions using the electric linear actuator and the lifting units.

In some configurations, the vehicle can be configured in a load carrier loading position, a transport position, and an upper goods loading position. In the load carrier loading position, the vehicle is configured to receive the load carrier from the rear. In the transport position, the vehicle is configured to transport the load carrier at a suitable height. In the upper goods loading position, the vehicle is configured to lift the load carrier to an even higher position, allowing for easier loading and unloading of goods from the load carrier.

In some examples, the operation of the lifting units involves using the electric linear actuator to control the movement of the lifting arm. The electric linear actuator applies a force to the lifting arm to lift and lower the load carrier. The lifting units are designed to lift the load carrier to a suitable height for transportation.

In some configurations, the electric linear actuator plays a role in the operation of the lifting units. The electric linear actuator is designed to apply a force to the lifting arm to lift and lower the load carrier. The electric linear actuator is connected to the lifting arm and controls its movement. In some examples, the electric linear actuator is a pulling type, arranged such that when a rod is pulled inward, it causes the lifting arm to move upwards to lift the load carrier.

The load transportation vehicle may be a truck. However a number of transportation vehicles, such as, cars, vans, railcars, bicycles etc. may use the herein disclosed solution.

### Description of examples of the disclosure

In this section, examples of the load transportation vehicle and the load carrier are provided.

These examples illustrate the various features and configurations of the vehicle and the load carrier that enhance their functionality and efficiency in load transportation.

In some examples, the load transportation vehicle is designed with a rearwardly open chassis and four lifting units. The rearwardly open chassis is designed to receive a load carrier from the rear, while the four lifting units are designed to lift and lower the load carrier. Each lifting unit includes a lifting arm, an electric linear actuator, a hook element, a first guide arm, and a second guide arm. These components work together to ensure the smooth operation of the vehicle during the loading, transportation, and unloading of loads.

In some configurations, the chassis of the vehicle can have different shapes and sizes to accommodate different types of load carriers. For example, the chassis can have a U-shaped configuration to facilitate the loading and unloading process. Similarly, the lifting units can also have different configurations to accommodate different types of load carriers. For example, the lifting units can include different types of lifting arms, electric linear actuators, hook elements, first guide arms, and second guide arms to suit different load carriers.

In some examples, the load carrier is designed to be loaded onto the vehicle from the rear. The load carrier includes a number of securing elements that are designed to be received and locked by the hook elements on the lifting arms of the vehicle. This ensures that the load carrier is securely attached to the vehicle during transportation.

In some configurations, the securing elements on the load carrier can have different shapes and sizes to fit into the hook elements on the lifting arms of the vehicle. For example, the securing element can have a rounded shape to easily fit into the rounded inner cross-sectional profile of the hook element. Similarly, the load carrier can be of different types, such as a container or any other suitable structure for carrying goods. The type of load carrier can be selected based on the type of goods to be transported.

### Further details

1. A load transportation vehicle (100) comprising:
   a rearwardly open chassis (103) configured to receive a load carrier (200) from an open rear part of the rearwardly open chassis (103) four lifting units (116), each lifting unit (116) comprising:
   a lifting arm (104) adapted to lift and lower the load carrier (200); and
   an electric linear actuator (110) configured to apply a force to the lifting arm (104) to lift and lower the load carrier (200).
2. The load transportation vehicle (100) according to item 1, wherein the rearwardly open chassis (103) is substantially U-shaped.
3. The load transportation vehicle (100) according to item 1 or 2, wherein the electric linear actuator (110) is a pulling electric linear actuator (110) arranged such that when a rod is pulled inward, it causes the lifting arm (104) to move upwards to lift the load carrier (200).
4. The load transportation vehicle (100) according to any one of items 1 to 3, wherein the lifting arm (104) performs a pivoting movement when lifting and lowering the load carrier (200).
5. The load transportation vehicle (100) according to any one of items 1 to 4, further comprising a position sensing unit configured to measure a position of an output rod or shaft of the electric linear actuator (110).
6. The load transportation vehicle (100) according to item 5, wherein the position sensing unit is integrated into the electric linear actuator (110).
7. The load transportation vehicle (100) according to any of items 1 to 6, wherein the lifting arm (104) comprises a hook element (105) at a first end of the lifting arm (104).
8. The load transportation vehicle (100) according to item 7, wherein the hook element (105) is adapted to receive a securing element (201) of the load carrier (200).
9. The load transportation vehicle (100) according to item 8, wherein the hook element (105) is adapted to receive and lock a securing element (201) of the load carrier (200).
10. The load transportation vehicle (100) according to any of items 7 to 9, wherein the hook element (105) has a rounded inner cross-sectional profile (111).
11. The load transportation vehicle (100) according to any of items 1 to 10, wherein the electric linear actuator (110) is connected to one or more guide arms (106; 108), which are connected to the lifting arm (104).
12. The load transportation vehicle (100) according to any of items 1 to 11, wherein the electric linear actuator (110) is connected to a second guide arm (108) by a movable electric linear actuator joint (115), wherein the second guide arm (108) is connected to a first guide arm (106) by a fixed guide arm joint (109), and wherein the first guide arm (106) is connected to the lifting arm (104) by a movable lifting arm joint (112).
13. The load transportation vehicle (100) according to any one of items 1 to 12, wherein the lifting arm (104) comprises a lifting arm positioning wheel (113) at a second end of the lifting arm (104) configured to move in a guide groove (107) forwards or backwards relative to the load transportation vehicle (100).
14. The load transportation vehicle (100) according to any of items 11 to 13, wherein each lifting unit (116) is arranged such that when the electric linear actuator (110) applies a force to the lifting arm (104) to lift or lower the load carrier (200), a first end of the lifting arm (104) moves substantially vertically.
15. The load transportation vehicle (100) according to any one of items 1 to 14, wherein the load transportation vehicle (100) is configurable in at least three configurations: a load carrier loading position, a transport position and an upper goods loading position.
16. The load transportation vehicle (100) according to item 15, wherein he load transportation vehicle (100) is configurable in a further tipping configuration.
17. The load transportation vehicle (100) according to item 16, wherein two front lifting units (116) are configured to hold the load carrier (200) in an upper position and wherein two rear lifting units (116) are configured to hold the load carrier (200) in a lower position in the tipping configuration.
18. The load transportation vehicle (100) according to any one of items 1 to 17, wherein the four lifting units (116) are individually controllable and/or wherein the four lifting units (116) controllable in front and rear pairs of lifting units (116).
19. The load transportation vehicle (100) according to any one of items 1 to 18, wherein the four lifting units (116) are disposed at or adjacent to four corners of the rearwardly open chassis (103).
20. The load transportation vehicle (100) according to any one of items 1 to 19, wherein the load transportation vehicle (100) is a truck.
21. A load transportation vehicle assembly (300) comprising a load transportation vehicle (100) according to any one of items 1 to 20; and a load carrier (200).
22. The load transportation vehicle assembly (300) according to item 21, wherein the load carrier (200) has four securing elements (201) configured to fit and optionally be locked in the hook elements (105) of the lifting arms (104).
23. The load transportation vehicle assembly (300) according to item 22, wherein at least two of the securing elements (201) are movable in a substantially longitudinal direction of the load carrier (200).
24. The load transportation vehicle assembly (300) according to any one of items 21 to 23, wherein the load carrier (200) is a container.
25. A method (400) of using a load transportation vehicle according to any one of items 1 to 17, comprising the steps of:
   loading (401) the load carrier (200) onto the load transportation vehicle (100) from the rear;
   lifting (402) the load carrier (200) to a suitable height using the electric linear actuators (110) of the lifting units (116); and
   during the step of lifting the load carrier (200), securing (403) the load carrier (200) to the load transportation vehicle (100) using hook elements (105) on the lifting arms (104).

## Claims

1. A load transportation vehicle (100) comprising:
a rearwardly open chassis (103) configured to receive a load carrier (200) from an open rear part of the rearwardly open chassis (103) four lifting units (116), each lifting unit (116) comprising:
a lifting arm (104) adapted to lift and lower the load carrier (200); and
an electric linear actuator (110) configured to apply a force to the lifting arm (104) to lift and lower the load carrier (200).

2. The load transportation vehicle (100) according to claim 1, wherein the electric linear actuator (110) is a pulling electric linear actuator (110) arranged such that when a rod is pulled inward, it causes the lifting arm (104) to move upwards to lift the load carrier (200).

3. The load transportation vehicle (100) according to any one of claims 1 to 2, further comprising a position sensing unit configured to measure a position of an output rod or shaft of the electric linear actuator (110), preferably wherein the position sensing unit is integrated into the electric linear actuator (110).

4. The load transportation vehicle (100) according to any of claims 1 to 3, wherein the lifting arm (104) comprises a hook element (105) at a first end of the lifting arm (104), wherein the hook element (105) is adapted to receive and lock a securing element (201) of the load carrier (200).

5. The load transportation vehicle (100) according to claim 4, wherein the hook element (105) has a rounded inner cross-sectional profile (111).

6. The load transportation vehicle (100) according to any of claims 1 to 5, wherein the electric linear actuator (110) is connected to one or more guide arms (106; 108), which are connected to the lifting arm (104).

7. The load transportation vehicle (100) according to any of claims 1 to 6, wherein the electric linear actuator (110) is connected to a second guide arm (108) by a movable electric linear actuator joint (115), wherein the second guide arm (108) is connected to a first guide arm (106) by a fixed guide arm joint (109), and wherein the first guide arm (106) is connected to the lifting arm (104) by a movable lifting arm joint (112).

8. The load transportation vehicle (100) according to any one of claims 1 to 7, wherein the lifting arm (104) comprises a lifting arm positioning wheel (113) at a second end of the lifting arm (104) configured to move in a guide groove (107) forwards or backwards relative to the load transportation vehicle (100).

9. The load transportation vehicle (100) according to any of claims 1 to 8, wherein each lifting unit (116) is arranged such that when the electric linear actuator (110) applies a force to the lifting arm (104) to lift or lower the load carrier (200), a first end of the lifting arm (104) moves substantially vertically.

10. The load transportation vehicle (100) according to any one of claims 1 to 9, wherein the load transportation vehicle (100) is configurable in at least three configurations: a load carrier loading position, a transport position and an upper goods loading position.

11. The load transportation vehicle (100) according to claim 10, wherein he load transportation vehicle (100) is configurable in a further tipping configuration.

12. The load transportation vehicle (100) according to claim 11, wherein two front lifting units (116) are configured to hold the load carrier (200) in an upper position and wherein two rear lifting units (116) are configured to hold the load carrier (200) in a lower position in the tipping configuration.

13. The load transportation vehicle (100) according to any one of claims 1 to 12, wherein the four lifting units (116) are individually controllable and/or wherein the four lifting units (116) controllable in front and rear pairs of lifting units (116).

14. A load transportation vehicle assembly (300) comprising a load transportation vehicle (100) according to any one of claims 1 to 13; and a load carrier (200).

15. A method (400) of using a load transportation vehicle according to any one of claims 1 to 13, comprising the steps of:
loading (401) the load carrier (200) onto the load transportation vehicle (100) from the rear;
lifting (402) the load carrier (200) to a suitable height using the electric linear actuators (110) of the lifting units (116); and
during the step of lifting the load carrier (200), securing (403) the load carrier (200) to the load transportation vehicle (100) using hook elements (105) on the lifting arms (104).
